# EUROPEAN PATENT SPECIFICATION

(11) **EP 1 880 958 B1**
(45) Date of publication and mention of the grant of the patent: **28.07.2010**
(21) Application number: 07119653.9
(22) Date of filing: 25.06.2004
(51) Int. Cl.: B65G 47/252, B65G 47/24, B65G 21/12

(54) **System to feed a machine, for example a tool machine, in a production line**
Zuführungssystem für eine Maschine, z.B. eine Werkzeugmaschine in einer Produktionsanlage
Système d'alimentation de machine, par exemple une machine-outil, dans une ligne de production

(30) Priority: 20.11.2003 WO PCT/IT03/00755
(43) Date of publication of application: 23.01.2008
(62) Divisional of application: 04425461.3
(73) Proprietor: Automazioni Industriali S.R.L., 25065 Lumezzane S.S. (IT)
(72) Inventor: BAGLIONI, Giuliano, 25065, Lumezzane S.S. (Brescia) (IT)
(74) Representative: Pulieri, Gianluca Antonio

(56) References cited:
- WO-A-03/047772
- BE-A- 366 689
- DE-A1- 2 108 023
- DE-A1- 4 315 018
- FR-A- 2 742 425
- US-A- 1 519 154
- US-A- 6 000 524
- PATENT ABSTRACTS OF JAPAN vol. 008, no. 032 (M-275), 10 February 1984 (1984-02-10) & JP 58 188228 A (ISEKI NOKI KK), 2 November 1983 (1983-11-02)

## Description

The present invention refers to a system to feed a machine, for example a tool machine, in a production line, according to the preamble of claim 1 and as disclosed in US-A- 1519154.

These systems like the one subsequently described are generally used in the field of production lines to feed a machine, for example a tool machine, with a series of items suitably arranged for working on said machinery.

Although devices are known that are able to feed a machine with a series of items, said systems generally have a complex structure and, in spite of everything, are not particularly reliable.

In other words, these known systems present incorrect working, and feed the machinery or item pick up area with an item that is not positioned correctly for working.

The object of the present invention is to make a device for item overturning, which is constructionally simple and particularly reliable for feeding the items.

The object is achieved with a system, according to claim 1. The claims depending on this describe practicable variations.

The advantages and features of the system according to the present invention will become evident from the description reported later on of a preferred form of embodiment, which is not limiting and made with reference to the accompanying drawings, wherein:

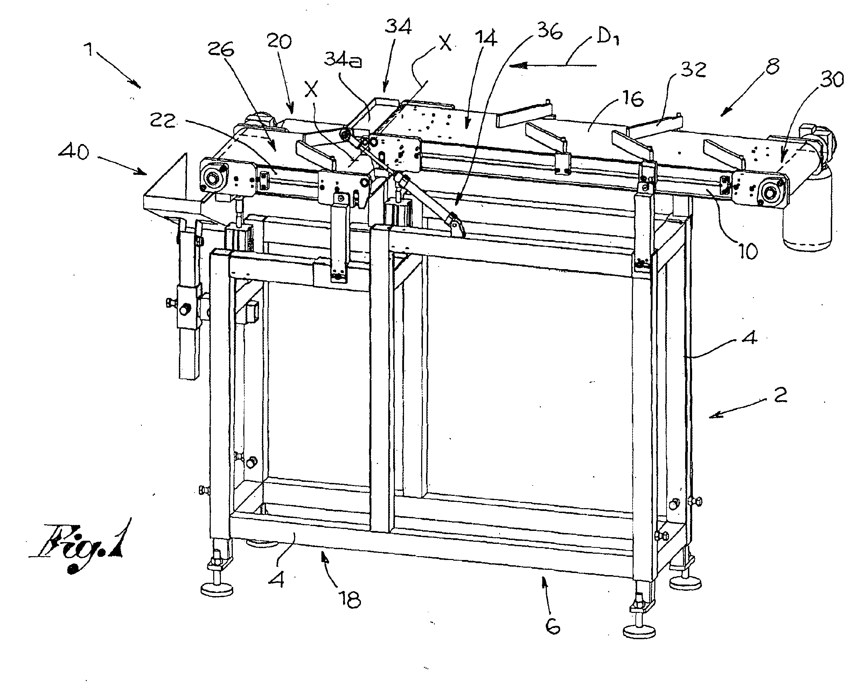

- figure 1 represents an axonometric view of a system according to a first variation of embodiment;

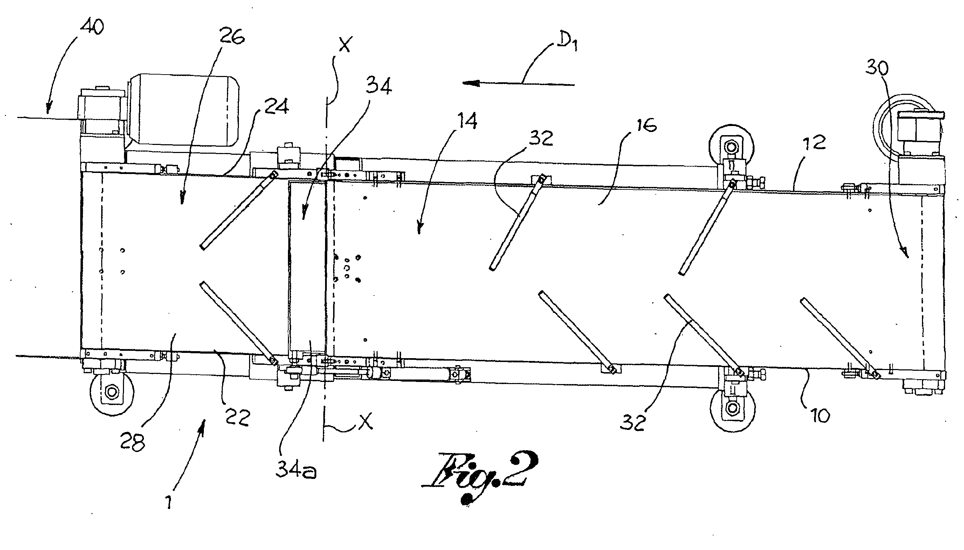

- figure 2 shows a view from above of the device in figure 1;

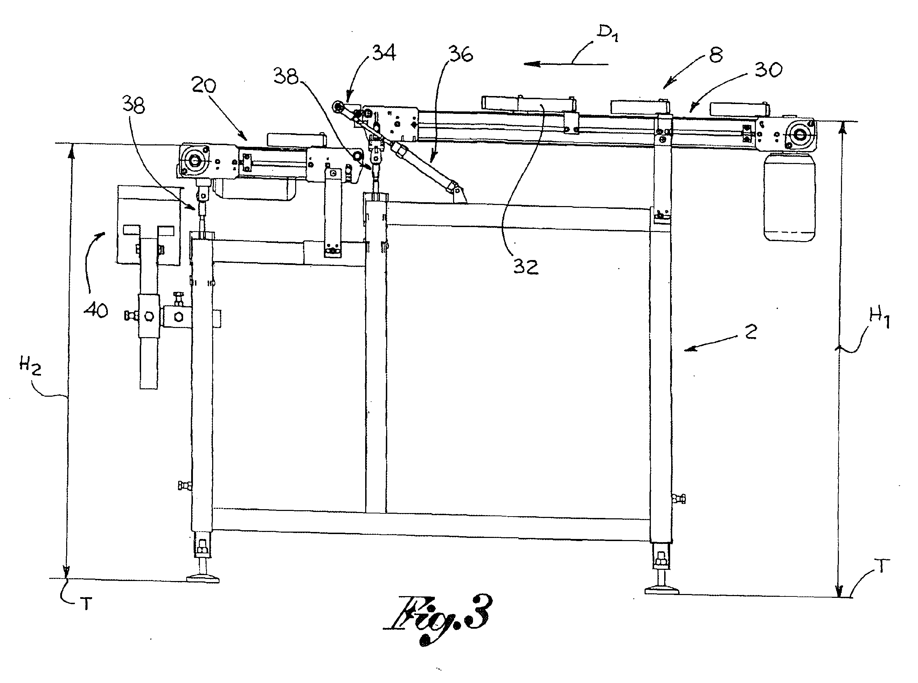

- figure 3 represents a side view of the system in figure 1;

- figures 4a and 4b show an axonometric view and an enlarged detail of the system respectively, according to the invention, in keeping with a variation of embodiment;

- figures 5a and 5b represent a side view and an enlarged detail respectively of the system in figure 4a;

- the figures from 6 to 11 each show a side view of the system according to the invention in keeping with further practicable variations.

With reference to the accompanying drawings, a system or device for item overturning is globally indicated with reference numeral 1.

In a preferred form of embodiment, said device comprises a supporting structure 2, for example a structure comprising a variety of beams 4.

. Said supporting structure 2 rests on a plane defined as a horizontal reference plane, with T-T trace.

. A first part 6 of said supporting structure 2 is adapted to support a first belt device 8, comprising supporting crosspieces 10, 12 and a conveyor belt 14.

. Said first belt device 8 has at least one of its parts set at a first height H₁, in relation to said reference plane.

. The first conveyor belt 14 is preferably fitted with a cover 16 made of a material that is adapted to drag the items on said conveyor belt.

. Moreover, said cover 16 preferably has a colour that is adapted to make a chromatic contrast with the items, said chromatic contrast being adapted to aid the acquisition of the image of the items resting on the cover with acquisition devices, such as a telecamera.

. Moreover, a second part 18 of said supporting structure 2 is adapted to support a second belt device 20, comprising supporting crosspieces 22, 24 and a conveyor belt 26.

. Said second device with a belt 20 presents at least one of its parts set at a second height H₂, in relation to the reference plane T-T.

The second conveyor belt 26 is preferably fitted with a cover 28 that is made of a material adapted to drag the items set on said conveyor belt.

Moreover, the colour of said cover 28 is preferably adapted to create a chromatic contrast with the items.

Preferably, said heights H₁, H₂ are adjustable. Moreover, said second height H₂ is preferably lower than said first height H₁.

During normal operation of device 1, the first conveyor belt 14 presents a dragging direction D₁ that is adapted to move the items towards the second conveyor belt 26.

With reference to said dragging direction, the terms "upstream" and "downstream" are defined referring to areas set successively one after another according to said dragging direction.

A loading area 30 is foreseen upstream from the first conveyor belt 14, where the jumbled items are fed randomly.

According to a preferred form of embodiment, device 1 comprises diverting devices that are adapted to divert the items moving towards certain areas of said belts 14, 26.

According to a preferred form of embodiment, said diverting devices comprise at least one stationary, diverting part 32, for example positioned along at least one of said supporting crosspieces 10, 12, 22, 24 of the first conveyor belt 14 and/or of the second conveyor belt 26.

Said diverting parts 32 are set at a distance from the upper surface of said conveyor belts so as not to interfere with the movement of the respective covers.

Preferably, said diverting devices comprise a variety of diverting parts 32, for example positioned along said supporting crosspieces 10, 12, 22, 24 of the first conveyor belt 14 and of the second conveyor belt 26, for example converging from said crosspieces towards the central area of the belts.

Device 1 also comprises overturning devices adapted to overturn the jumbled items from said random order to said right or required position, adapted to subsequent working.

Said overturning devices comprise a plate 34 set downstream from said first conveyor belt 14.

The moving devices feed the jumbled items to said plate 34 in a first loading position, and in a second unloading position, said items are fed to a pick up area.

Said plate 34 comprises a loading part 34a for loading the fed items.

. The items pass from the random order to a set order by rotation of the plate 34 from the loading position to the unloading position.

. In other words, said plate is hinged to the supporting structure 2 of the device, for example to said supporting beams, along a hinging axis X-X.

**.** Said plate is adapted to pass from the loading position, where the upper surface of the plate is basically level with the upper surface of the first conveyor belt 14, to the unloading position, where the upper surface of the plate 34 is basically perpendicular to the upper surface of the second conveyor belt 26.

. In a preferred form of embodiment, in said loading position, the plate 34 is inclined in relation to the upper surface of the first conveyor belt, to aid loading of the items onto said plate.

. Preferably, said inclination is equal to 5 hexagesimal degrees, to make a slope in relation to the surface of the first conveyor belt, referring to the direction of movement of the items.

. In a preferred form of embodiment, in said unloading position, the plate 34 is not perpendicular to the upper surface of the second conveyor belt, but inclined, to aid unloading and overturning of the items on said second belt.

Said inclination is preferably equal to 95 hexagesimal degrees in relation to the upper surface of the first conveyor belt.

To make said rotation, said plate 34 acts with driving devices comprising a piston-cylinder system 36, which is a pneumatic or oleo-dynamic type for example.

Said piston-cylinder system is preferably hinged to the plate 34 and supporting structure 2, to make a sort of connecting rod to fit the position of the plate 34.

Said device 1 also comprises dampening devices, adapted to dampen any action in the pick up area of pick up devices acting with said device.

Preferably, said dampening devices comprise a piston-cylinder type dampening system 38 connected to the first conveyor belt 14 and/or second conveyor belt 26.

In other words, in said form of embodiment, the supporting beams 10, 12, 22, 24 of the first or second conveyor belt are hinged to the supporting structure 2 and also connected to said dampening piston-cylinder 38 system, for example level with a part distanced from the hinged part on the supporting structure 2.

The first belt device 8 and the second belt device 20 are preferably hinged to the supporting structure upstream, referring to the direction of movement of the items, whilst said piston-cylinder dampening system 38 is connected downstream from said belt devices.

. In other words again, said dampening system 38 is adapted to dampen vertical movement of said belt devices and support said overhanging belt devices.

. Moreover, device 1 comprises discarding devices towards which the overturned items, which are not yet positioned in the required order for subsequent working, are moved.

. According to a preferred form of embodiment, said discarding devices comprise a chute 40 set downstream from the device.

. Said discarding devices preferably act with recovery devices adapted to direct the randomly positioned, overturned items back to the loading area 30 of device 1 again.

. Said chute can preferably be adjusted in height, in other words its height of reference in relation to the reference plane may vary depending on the requirements.

. During normal operation of device 1, the jumbled items are fed to the loading area 30 of the first conveyor belt 14 and moved towards the pick up area.

The diverting devices are set along the path followed by the jumbled items and interfere with the path followed by said items, for example diverting them towards the central part of said belt.

According to a preferred form of embodiment, said device acts with system comprises devices for detecting the position of the jumbled items.

Said detection devices preferably comprise a first telecamera set in a position that is adapted to detect the position of the jumbled items before said items are fed onto the plate 34 or already loaded onto the plate 34.

According to a preferred form of embodiment, said first telecamera surmounts the area of the first conveyor belt next to the plate 34.

The first telecamera acquires the image of the item to be fed to the plate.

Said telecamera is operatively connected to a control system of device 1 that is adapted to compare the acquired image of the item to be fed with an image of reference of the ordered item, in other words the item in the right position for subsequent working.

If said acquired image matches said image of reference, it is not necessary for the item to be overturned.

The item that is not overturned, but already in the required or right position, is fed to the plate 34 and taken from here by pick up devices.

For example, said pick up devices comprise a robot fitted with gripping devices, adapted to pick up the item and feed it to a machine, for example a tool machine, for subsequent working.

Clearly in this situation, said pick up area is made from a part of the upper surface of the conveyor belt 14.

If said acquired image does not match said image of reference, the item needs to be overturned to have an item overturned in the required or right order.

In this case, the detection devices act with the control system of the device and control the rotation of the plate.

Due to the simple force of gravity or, in a preferred form of embodiment, with the aid of foreseen thrusting devices, the item is overturned onto the second conveyor belt 26.

Said second conveyor belt, which preferably acts with additional diverting parts to divert the overturned item towards the central part of said second belt, moves the overturned item towards the area downstream from the second conveyor belt 26.

A second telecamera, which surmounts the terminal area of the second conveyor belt, acquires the image of the overturned item.

If the image of the overturned item matches the image of reference of the item in the required order, the device control system commands the item in the right position to be picked up from the second conveyor belt.

Clearly, in this case, said pick up area is made from a part of the upper surface of the second conveyor belt 26.

If the image of the overturned item still does not match the image of reference of the item in the required position, the control system of the device commands a further movement of the second conveyor belt 26, which takes the item that is overturned but still not in the required position towards the unloading devices, in other words, towards the chute 40.

Unusually, the system according to the present invention is constructionally simple and nonetheless reliable with regard to overturning the jumbled items.

Advantageously, the system presents regular working, wherein the items to be overturned rarely become blocked in one part of the system, thus preventing continued working.

According to an even further advantageous feature, the position of the items can be detected by a system comprising only two telecameras, since the path of the jumbled items is guided towards the image acquisition areas.

Also advantageously, the action of the gripping robot, which sometimes almost knocks the conveyor belts, does not affect the whole structure.

According to an even further advantageous feature, the system can easily be adapted to items of varying shapes and sizes, by suitably adjusting the heights of the essential parts.

It is clear that numerous variations can be made to the system according to the present invention.

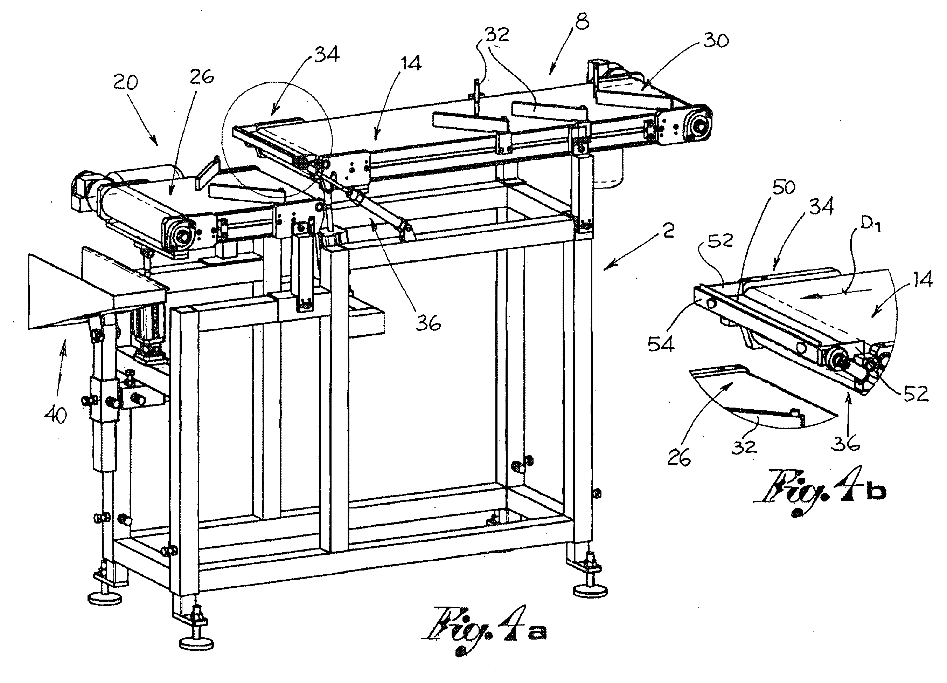

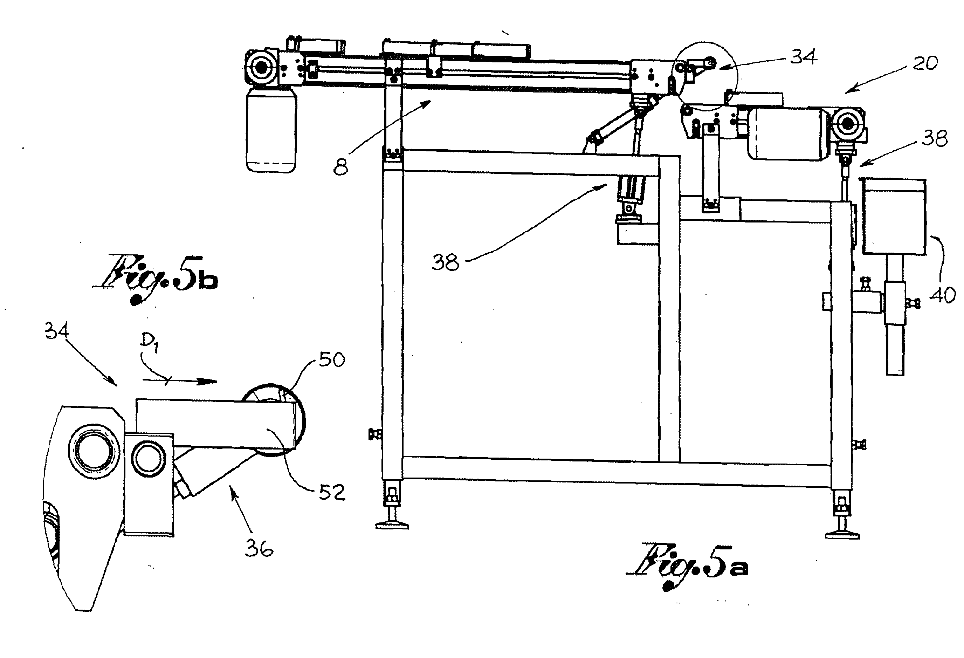

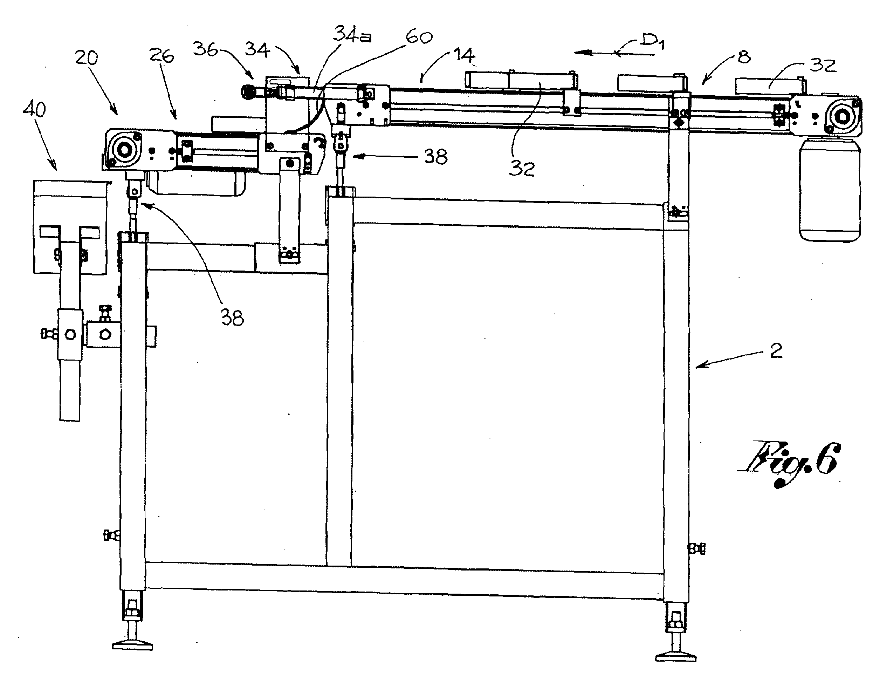

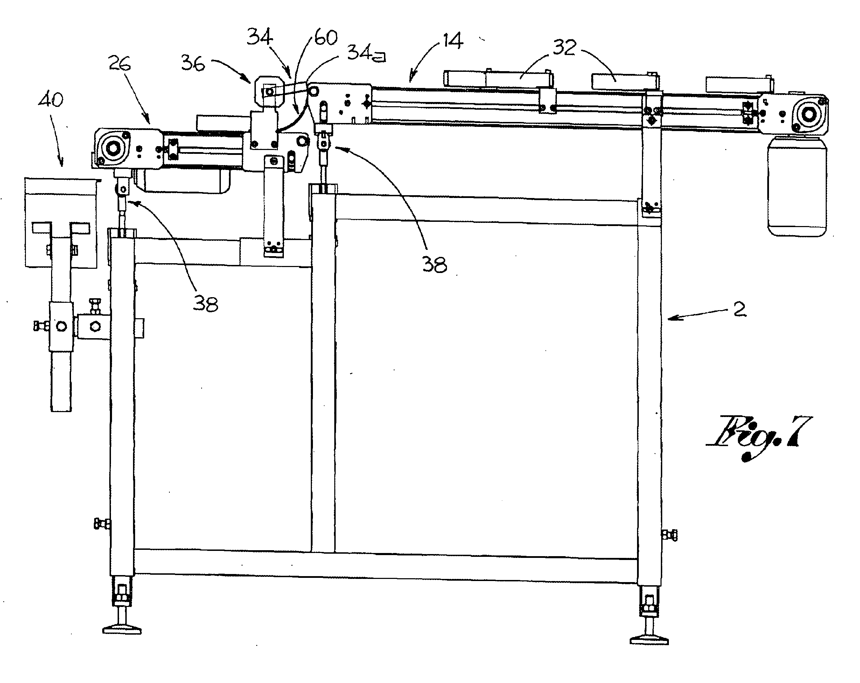

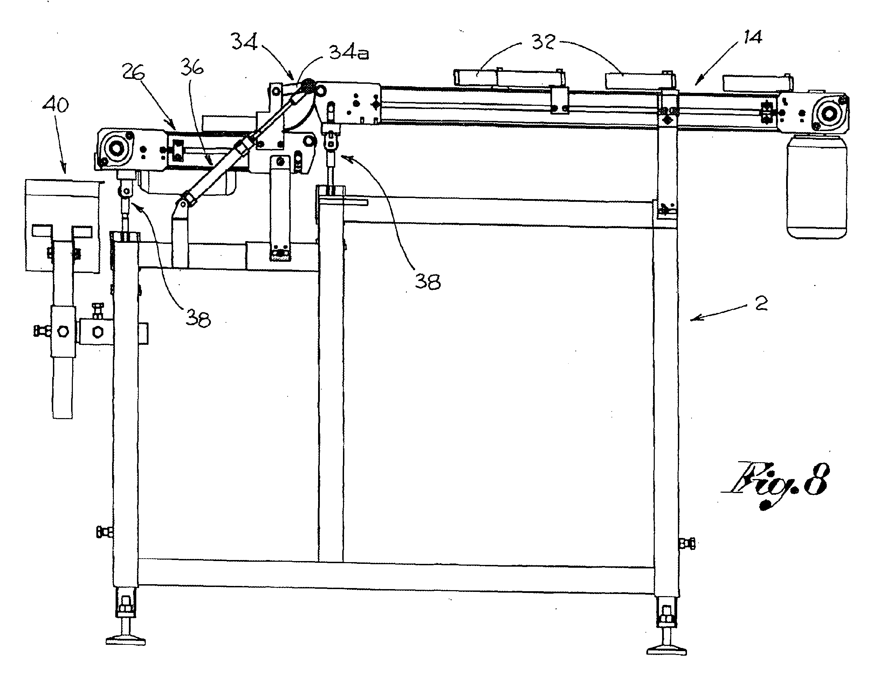

For example, in a varied form of embodiment, the plate 34 is fitted with an overturning part 50 called a whisker (figures 4a, 4b, 5a and 5b).

In other words, said plate 34, downstream from the first conveyor belt 14, has a set of side walls 52, which define the plate, except along the side where the items access said plate from the first conveyor belt.

. In particular, said plate is fitted with a transversal, side wall 54, basically arranged perpendicularly to the direction of movement D₁ of the items.

According to said variation of embodiment, the height of said transversal, side wall is greater than the height of the remaining side walls. According to this variation, said transversal, side wall is defined as overturning part.

The item loaded onto the plate is set against said wall before being overturned by the rotating plate.

According to a further variation of embodiment, said overturning part 50 comprises a small crosspiece that can be connected to said transversal, side wall so that it protrudes in relation to the remaining side walls (figures 4b and 5b).

In other words, said small crosspiece, connected to the transversal, side wall of the plate 34, has at least one part protruding in relation to the height of at least one of the remaining side walls of the plate 34.

Advantageously, said overturning part facilitates the overturning of the item loaded onto the plate 34.

Also advantageously, said overturning part can easily be moved and replaced to suit the different needs of the various shaped and sized items to be overturned.

According to a further variation of embodiment, said item overturning devices are "inverse rotation" type (figures from 6 to 11).

In said variation of embodiment, device 1 also comprises an overturning chute 60 that acts with the plate 34 to succeed in overturning the items.

Said overturning chute 60, which preferably has a curvilinear profile, is downstream from the first belt device 8 that is connected to the upper surface of the first conveyor belt 14 and to the upper surface of the second conveyor belt 26.

Said overturning chute is at least partially surmounted by the plate 34. In particular, said overturning chute 60 is surmounted by the loading part 34a of said plate 34.

Moreover, said overturning chute 60 faces the part of the plate 34 with its concave part.

The hinging axis X-X of the plate 34 at the supporting structure 2 or at the supporting crosspieces 10, 12 of the first belt device 8 is set downstream from the loading area of the items on the plate 34.

In a variation of embodiment, said plate 34 is moved by driving devices 36 comprising a system fitted with a rotating piston-cylinder.

In a further variation of embodiment, said plate 34 is operatively connected to a linear type piston-cylinder system.

In an even further variation of embodiment, said plate is operatively connected to guide devices adapted to guide said plate from the loading position to the unloading position by rotation and translation that is by rototranslation.

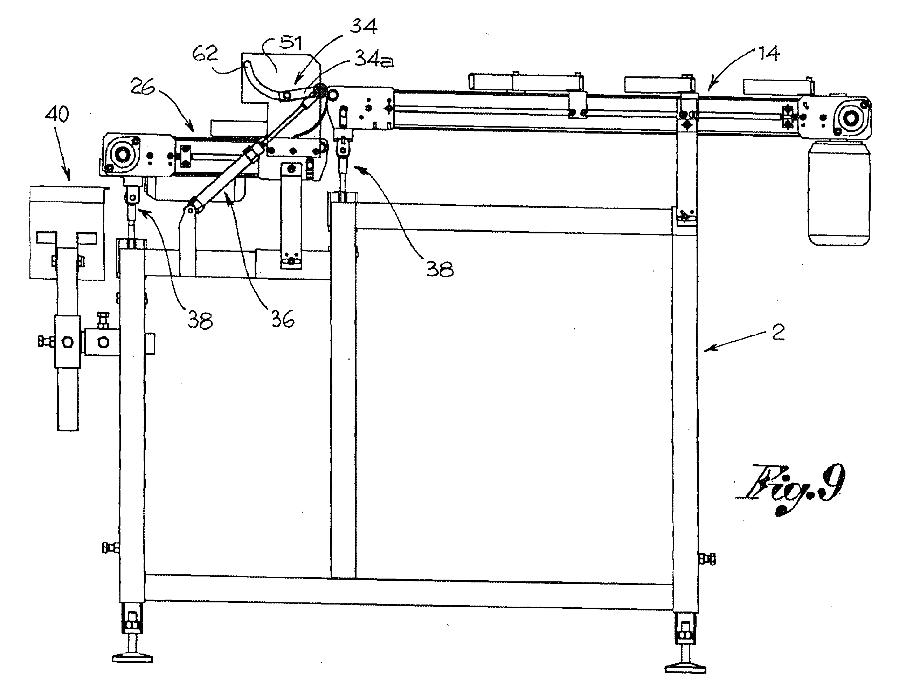

Said guide devices comprise at least one guide plate 61 fitted with a groove 62 that defines a path for the hinging axis X-X of the plate 34 from the loading position to the unloading position and vice versa (figure 9).

Said path defined by the guide devices is adapted to distance said hinging axis X-X of the plate 34 from the transversal end of the first conveyor belt 14 whilst rotating the plate.

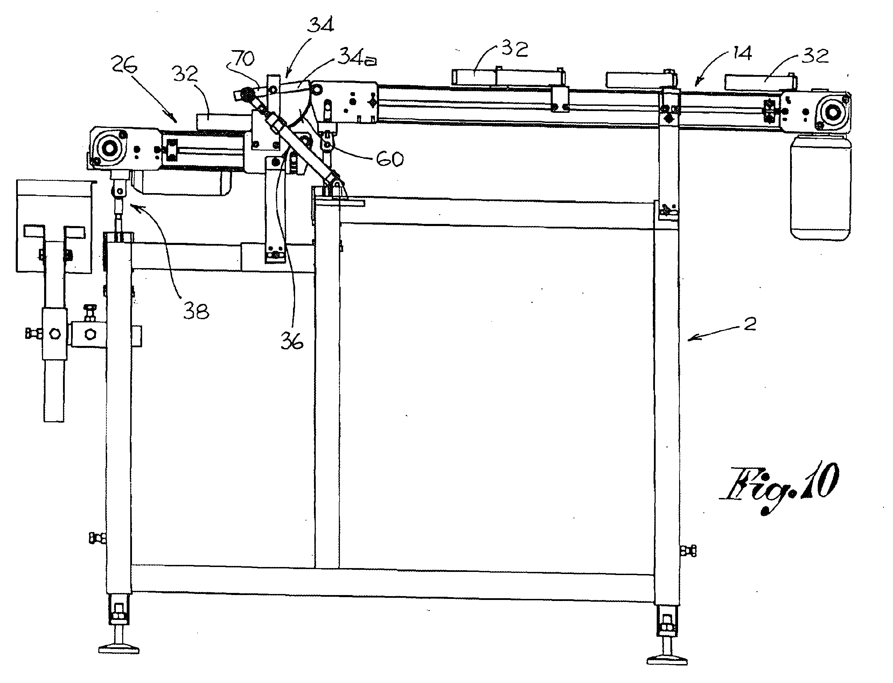

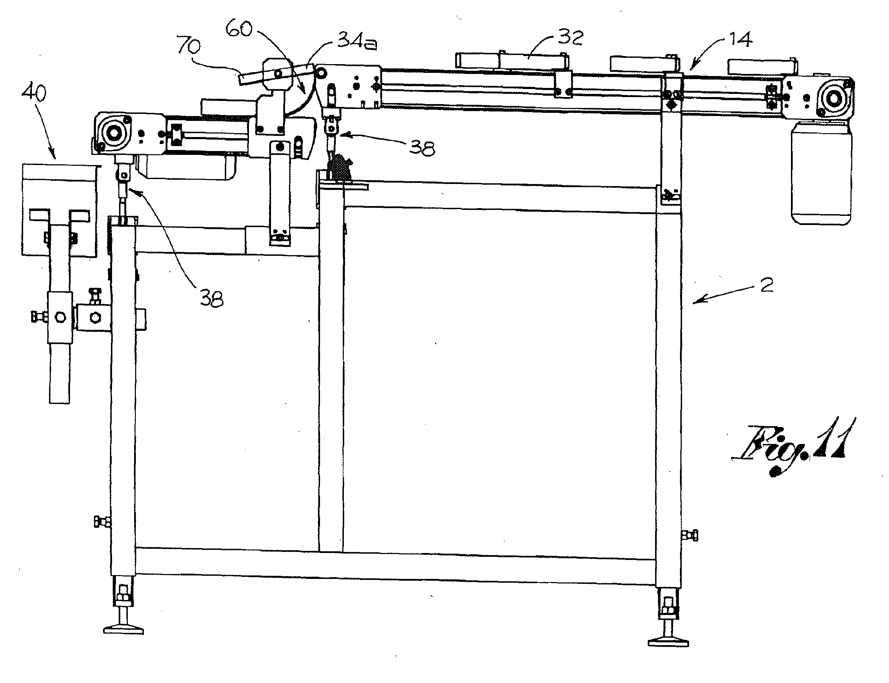

According to a further variation of embodiment, said plate has a connecting layer 70 adapted to act with said driving devices, for example a linear piston-cylinder system (figures 10 and 11).

Said connecting layer 70 and said loading part of the plate 34 preferably appear as one single flat part and the connection point of the plate with the piston-cylinder system is downstream from the hinging axis X-X of the plate, said axis in turn being downstream from the loading part 34a of the plate 34.

According to a variation of embodiment, said driving devices 36 comprise a rotating piston-cylinder system (figure 11).

In said variation of embodiment, the layer 70 and the loading part 34a have interchangeable functions.

In other words, after a 180 degree hexagesimal rotation of the plate 34, the loading part 34a moves into the position of the layer 70 and the layer 70 moves into the position of the plate 34, taking on the function of the loading part 34a.

The item is loaded onto the loading area of the plate 34 during normal operation of the device, according to the "inverse rotation" variations.

If the position of the loaded item is incorrect, in other words, if the item is not in the required position, the device control system commands the motor devices, and they carry out the rotation or rototranslation of the plate 34, which opens onto the overturning chute, like a trapdoor.

The loaded item moves from the plate 34 to the chute, for example by gravity. The item slides along the overturning chute and reaches the second conveyor belt in an overturned position.

These variations are also clearly included within the field of protection, as defined by the following claims.

## Claims

1. A system comprising:
- a first belt device (8) comprising a first conveyor belt (14), a loading area (30) being provided upstream from the first conveyor belt (14), where jumbled items are fed randomly, and a first pick up area being provided on the first conveyor belt for picking up items in the right position;
- a second belt device (20) comprising a second conveyor belt (26), a second pick up area being provided on the second conveyor belt for picking up items in the right position;
- overturning devices adapted to overturn the jumbled items from the random order to a right position, comprising a plate (34) set downstream from said first conveyor belt (14), the item being overturned onto the second conveyor belt (26);
said system being **characterized in that** the system comprises
- an item pick up device suitable for picking up the items, said pick up device being designed to pick up items from a pick up area of the first conveyor belt and/or of the second conveyor belt;
- dampening devices, adapted to dampen any action in the pick up areas of pick up devices.

2. A system according to claim 1, wherein the dampening devices comprise a piston-cylinder type dampening system (38) connected to the first conveyor belt (14) and/or second conveyor belt (26).

3. A system according to claim 2, wherein supporting beams (10,12,22,24) of the first or second conveyor belt are hinged to a supporting structure (2) and also connected to the dampening piston-cylinder (38) system.

4. A system according to anyone of the previous claims, comprising devices for detecting the position of the jumbled items.

5. A system according to claim 4, wherein said devices for detecting the position comprise a first telecamera set in a position that is adapted to detect the position of the jumbled items before said items are fed onto the plate (34) or already loaded onto the plate (34),
wherein the first telecamera surmounts the area of the first conveyor belt next to the plate (34),
wherein the first telecamera acquires the image of the item to be fed to the plate,
wherein said telecamera is operatively connected to a control system that is adapted to compare the acquired image of the item to be fed with an image of reference of the ordered item, in other words the item in the right position for subsequent working.

6. A system according to claim 5, wherein said devices for detecting the position comprise a second telecamera, which surmounts the terminal area of the second conveyor belt, acquiring the image of the overturned item,
wherein if the image of the overturned item matches the image of reference of the item in the required order, the device control system commands the item in the right position to be picked up from the second conveyor belt.

7. A system according to anyone of the previous claims, wherein the pick up devices comprise a robot fitted with gripping devices, adapted to pick up the item and feed it to a machine, for example a tool machine, for subsequent working.

8. A system according to anyone of the previous claims, comprising diverting devices that are adapted to divert the items moving towards certain areas of said belts (14,26).

9. A system according to anyone of the previous claims, wherein the first conveyor belt (14) is set at a first height (H1), the second conveyor belt (26) is set at a second height (H2), the second height (H2) being lower than the first height (H1).

## Patentansprüche

1. Ein System umfassend
- eine erste Bandvorrichtung (8), die ein erstes Förderband (14), einen Bel-adebereich (30), der stromaufwärts des ersten Förderbands (14) vorgese-hen ist, an dem Gegenstände durcheinander wahllos zugeführt werden, und einen ersten Entnahmebereich, der auf dem ersten Förderband zum Entnehmen von Gegenständen in der korrekten Position vorgesehen ist,
- eine zweite Bandvorrichtung (20), die ein zweites Förderband (26), einen zweiten Entnahmebereich, der zum Entnehmen von Gegenständen in der korrekten Position vorgesehen ist, umfasst,
- Kippvorrichtungen, die so ausgebildet sind, dass die durcheinander ange-ordneten Gegenstände aus der wahllosen Anordnung in eine korrekte Position gekippt werden, und eine Platte (34), die stromabwärts des ersten Förderbands (14) angeordnet ist, umfasst, wobei die Gegenstände auf das zweite Förderband (26) umgekippt werden,
wobei das System **dadurch gekennzeichnet** wird, dass es folgendes umfasst
- eine Gegenstandentnahmevorrichtung, die zum Entnehmen der Gegen-stände geeignet ist, wobei diese derart ausgelegt ist, dass sie die Gegen-stände von einem Entnahmebereich des ersten Förderbands und/oder des zweiten Förderbands aufnehmen kann,
- Dämpfungsvorrichtungen, die derart ausgebildet sind, dass sie jegliche Einwirkungen in den Entnahmebereichen der Entnahmevorrichtungen dämpfen.

2. System gemäß Anspruch 1, wobei die Dämpfungsvorrichtungen ein Zylinder-Kolben-Dämpfungssystem (38) umfassen, das mit dem ersten Förderband (14) und/oder dem zweiten Förderband (26) verbunden ist.

3. System gemäß Anspruch 2, wobei Stützträger (10, 12, 22, 24) des ersten oder des zweiten Förderbands mit einem Stützgestell (2) gelenkig verbunden sind und ferner mit dem Zylinder-Kolben-Dämpfungssystem (38) verbunden sind.

4. System gemäß einem der vorangehenden Ansprüche umfassend Vorrichtun-gen zum Bestimmen der Position der durcheinander angeordneten Gegen-stände.

5. System gemäß Anspruch 4, wobei die Vorrichtungen zum Bestimmen der Po-sition eine erste Fernsehkamera umfasst, die in einer Position angeordnet ist und die derart ausgelegt ist, dass die Position der wirr durcheinander ange-ordneten Gegenstände bestimmbar ist, bevor diese Gegenstände der Platte (34) zugeführt werden oder diese schon auf der Platte (34) angeordnet sind,
wobei die erste Fernsehkamera den Bereich des ersten Förderbands benach-bart zur Platte (34) abdeckt,
wobei die erste Fernsehkamera das Bild des Gegenstands, der der Platte zu-geführt werden soll, aufnimmt,
wobei die Fernsehkamera mit einem Steuersystem betriebsmäßig verbunden ist, das derart ausgebildet ist, dass es die aufgenommenen Bilder des Gegen-stands, der zugeführt werden soll, mit einem Bezugsbild des ausgerichteten, das heißt des in der korrekten Position für die nachfolgende Bearbeitung be-findlichen Gegenstands vergleicht.

6. System gemäß Anspruch 5, wobei die Vorrichtungen zum Bestimmen der Po-sition eine zweite Fernsehkamera umfassen, die den Endbereich des zweiten Förderbands abdeckt und das Bild des umgekippten Gegenstands aufnimmt,
wobei, wenn das Bild des umgekippten Gegenstands mit dem Bezugsbild des Gegenstands in der geforderten Ausrichtung übereinstimmt, das Vorrich-tungssteuersystem bestimmt, dass der Gegenstand sich in der korrekten Posi-tion befindet, um nachfolgend von dem zweiten Förderband aufgenommen zu werden.

7. System gemäß einem der vorangehenden Ansprüche, wobei die Entnahmevorrichtungen einen Roboter umfassen, der mit den Greifvorrichtungen versehen ist, und derart ausgebildet ist, dass er den Gegenstand aufnehmen und einer Maschine, beispielsweise einer Werkzeugmaschine, für die nachfolgende Bearbeitung zuführen kann.

8. System gemäß einem der vorangehenden Ansprüche umfassend Leitvorrich-tungen, die derart ausgebildet sind, dass sie die Gegenstände zu bestimmten Bereichen der Bänder (14, 26) leiten.

9. System gemäß einem der vorangehenden Ansprüche, wobei das erste För-derband (14) auf einer ersten Höhe (H1) und das zweite Förderband (26) auf einer zweiten Höhe (H2) angeordnet ist, wobei die zweite Höhe (H2) geringer als die erste Höhe (H1) ist.

## Revendications

1. Système comprenant :
- un premier dispositif à bande (8) comprenant une première bande de transport (14), une zone de chargement (30) aménagée en amont de la première bande de transport (14), où des articles en vrac sont chargés en position aléatoire, et une première zone de collecte mise en oeuvre sur la première bande de transport pour recueillir des articles dans la bonne position ;
- un second dispositif à bande (20) comprenant une seconde bande de transport (26), une seconde zone de collecte étant mise en oeuvre sur la seconde bande de transport pour recueillir des articles dans la bonne position ;
- des dispositifs de retournement adaptés pour retourner les articles en vrac de l'ordre aléatoire à une bonne position, comprenant une plaque (34) placée en aval de ladite première bande de transport (14), l'article étant retourné sur la seconde bande de transport (26) ;
ledit système étant **caractérisé en ce que** le système comprend :
- un dispositif de collecte d'articles approprié pour recueillir les articles, ledit dispositif de collecte étant conçu pour recueillir des articles dans une zone de collecte de la première bande de transport et/ou de la seconde bande de transport ;
- des dispositifs d'amortissement adaptés pour amortir toute action dans les zones de collecte des dispositifs de collecte.

2. Système selon la revendication 1, dans lequel les dispositifs d'amortissement comprennent un système d'amortissement de type à piston-cylindre (38) raccordé à la première bande de transport (14) et/ou à la seconde bande de transport (26).

3. Système selon la revendication 2, dans lequel des poutres de support (10, 12, 22, 24) de la première ou de la seconde bande de transport sont articulées sur une structure de support (2) et également raccordés au système d'amortissement à piston-cylindre (38).

4. Système selon l'une quelconque des revendications précédentes, comprenant des dispositifs pour détecter la position des articles en vrac.

5. Système selon la revendication 4, dans lequel lesdits dispositifs pour détecter la position comprennent une première télécaméra réglée dans une position qui est adaptée pour détecter la position des articles en vrac avant que lesdits articles ne soient chargés sur la plaque (34) ou déjà chargés sur la plaque (34), dans lequel la première télécaméra surmonte la zone de la première bande de transport à côté de la plaque (34), dans lequel la première télécaméra acquiert l'image de l'article à charger sur la plaque,
dans lequel ladite télécaméra est raccordée en service à un système de commande qui est adapté pour comparer l'image acquise de l'article à charger à une image de référence de l'article commandé, en d'autres termes, l'article dans la bonne position pour un traitement ultérieur.

6. Système selon la revendication 5, dans lequel lesdits dispositifs pour détecter la position comprennent une seconde télécaméra, qui surmonte la zone terminale de la seconde bande de transport, pour acquérir l'image de l'article retourné, dans lequel, si l'image de l'article retourné correspond à l'image de référence de l'article dans l'ordre requis, le système de commande des dispositifs commande que l'article dans la bonne position soit recueilli sur la seconde bande de transport.

7. Système selon l'une quelconque des revendications précédentes, dans lequel les dispositifs de collecte comprennent un robot équipé de dispositifs de préhension, adaptés pour collecter l'article et le charger dans une machine, par exemple une machine-outil, pour un traitement ultérieur.

8. Système selon l'une quelconque des revendications précédentes, comprenant des dispositifs de déviation qui sont adaptés pour dévier les articles se déplaçant vers certaines zones desdites bandes (14, 26).

9. Système selon l'une quelconque des revendications précédentes, dans lequel la première bande de transport (14) est réglée à une première hauteur (H1) , la seconde bande de transport (26) est réglée à une seconde hauteur (H2), la seconde hauteur (H2) étant inférieure à la première hauteur (H1) .
